# EUROPÄISCHE PATENTSCHRIFT

(11) **EP 2 002 253 B1**
(45) Veröffentlichungstag und Bekanntmachung des Hinweises auf die Patenterteilung: **13.06.2012**
(21) Anmeldenummer: 07726504.9
(22) Anmeldetag: 26.02.2007
(51) Int. Cl.: G01N 27/406

(54) **GASSENSOR**
GAS SENSOR
CAPTEUR DE GAZ

(30) Priorität: 28.03.2006 DE 102006014681
(43) Veröffentlichungstag der Anmeldung: 17.12.2008
(73) Patentinhaber: Robert Bosch GmbH, 70442 Stuttgart (DE)
(72) Erfinder: DIEHL, Lothar, 70839 Gerlingen (DE); SCHEFFEL, Marcus, 70839 Gerlingen (DE); SEILER, Thomas, 70195 Stuttgart (DE); REINSHAGEN, Holger, 71409 Schwaikheim (DE)
(86) Internationale Anmeldenummer: PCT/EP2007/051804
(87) Internationale Veröffentlichungsnummer: WO 2007/110291

(56) Entgegenhaltungen:
- EP-A1- 0 125 069
- EP-A2- 0 281 378
- EP-A2- 0 849 590
- WO-A-01/27602
- DE-A1- 3 905 298
- DE-A1- 3 917 710
- DE-A1- 10 257 284
- US-A- 4 787 966

## Beschreibung

### Stand der Technik

Die Erfindung geht aus von einem Gassensor nach Gattung des unabhängigen Anspruchs 1.

Ein solcher Gassensor geht beispielsweise aus der DE 102 57 284 A1 hervor. Bei diesem Gassensor, bei dem die Sensorheizung getaktet betrieben wird, um die jeweils erforderliche Heizleistung in das Sensorelement einzubringen, weist die Sensorheizung zwei Zuleitungen auf. Darüber hinaus sind für die Pumpzelle und die Nernstzelle eine Pumpstromleitung, eine Messleitung sowie eine Referenzpumpstromleitung vorgesehen. Für die Pump- und Nernstzelle wird eine gemeinsame Masseleitung verwendet.

Zur Kontaktierung einer solchen Breitbandsonde sind Stecker erforderlich, die sechs Pole enthalten müssen. Zusätzliche Leitungen und Steckerpins erfordern zusätzlichen Herstellungsaufwand und verursachen zusätzliche Kosten. Darüber hinaus ist eine Nutzung von Standardsteckern nicht ohne Weiteres möglich. Nachteilig ist auch, dass ein Spannungsabfall zwischen der Masse der Verbrennungskraftmaschine und der Masse der Schaltungsanordnung, die beispielsweise durch ein Steuergerät gebildet wird, variabel je nach Strombelastung ist und bei Korrosion der Verbindung auch ca. 1V und damit die Nernstspannung übersteigen kann.

Darüber hinaus kann in dem Sensorelement durch die Kopplung des getakteten Heizers mit der Nernstzelle des Sensors eine Störung im Ausgangssignal entstehen, die nicht erwünscht ist. Eine Kopplung des Heizstroms in die Signalleitung kann erhebliche Störungen der Funktion des Gassensors verursachen.

### Offenbarung der Erfindung

### Vorteile der Erfindung

Der erfindungsgemäße Gassensor mit den Merkmalen des Anspruchs 1 hat demgegenüber den Vorteil, dass auf eine Signalleitung und damit auch auf einen Steckerpin verzichtet werden kann, da die Pumpstromleitung und eine Heizleitung elektrisch leitend miteinander verbunden auf Masse gelegt sind, der Pumpstrom durch die Messleitung einspeisbar ist und die Nernstspannung zwischen der Messleitung und der Referenzpumpstromleitung abgreifbar ist. Aufgrund dieser Beschaltung ändert zwar der Spannungsabfall auf der getakteten Heizleitung die nötige Pumpspannung, der gemessene Pumpstrom fließt aber weiterhin nur durch die Pumpzelle. Darüber hinaus ist es vorteilhaft, dass die Nernstspannung keinen Offset aufweist.

Durch die in den abhängigen Ansprüchen aufgeführten Maßnahmen sind vorteilhafte Weiterbildungen und Verbesserungen des im unabhängigen Anspruch angegebenen Gassensors möglich.

Eine bevorzugte Ausführungsform sieht vor, die Heizung mit einer durch einen High-side-FET getakteten Spannung zu beaufschlagen. Ansonsten müsste die Masse der Regelelektronik auf U_{Batt} liegen.

Bei Vorhandensein eines Masseoffsets wird die Nernstspannung zweckmäßigerweise durch einen zwischen der Messleitung und der Referenzpumpstromleitung angeordneten Instrumentenverstärker erfasst.

Eine vorteilhafte Ausführungsform sieht eine Temperaturmessung des Sensorelements vor durch Messung des Innenwiderstands der Nernstzelle und/oder des Heizwiderstands.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: schematisch ein aus dem Stand der Technik bekanntes Sensorelement eines Gassensors;
- Fig.2: das Ersatzschaltbild eines aus dem Stand der Technik bekannten Gassensors und
- Fig. 3: das Ersatzschaltbild eines erfindungsgemäßen Gassensors.

### Ausführungsformen der Erfindung

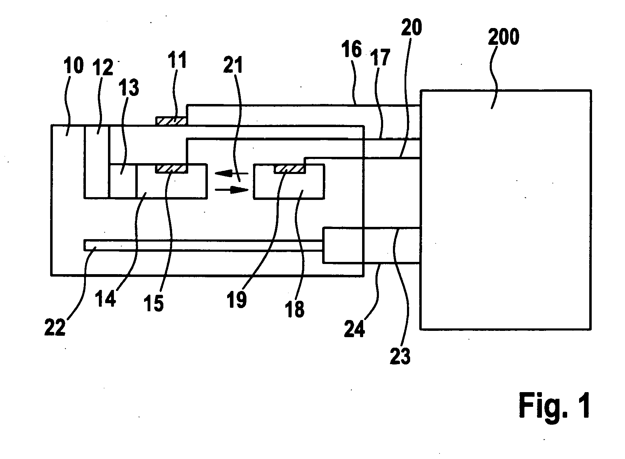

Der in Fig. 1 gezeigte Gassensor 10 enthält eine erste Elektrode, auch Außenpumpelektrode 11 genannt, die einem zu untersuchenden Gas ausgesetzt ist. Das zu untersuchende Gas gelangt über einen Gaskanal 12 und eine Diffusionsbarriere 13 in einen Messgasraum 14, in dem eine zweite Elektrode, auch innere Pumpelektrode 15 genannt, angeordnet ist. Zwischen der ersten und der zweiten Elektrode 11, 15 entsteht eine Pumpzelle. Die erste Elektrode 11 ist mit einer Pumpstromleitung 16 und die zweite Elektrode 15 mit einer Messleitung 17 verbunden.

Der Gassensor 10 enthält einen Referenzgasraum 18, in dem eine dritte Elektrode 19 angeordnet ist, die mit einer Referenzpumpstromleitung 20 verbunden ist. Zwischen dem Referenzgasraum 18 und dem Messgasraum 14, genauso wie zwischen den Elektroden 11, 15 entsteht eine Nernstzelle, in der ein Referenzgasionentransport 21 stattfinden kann.

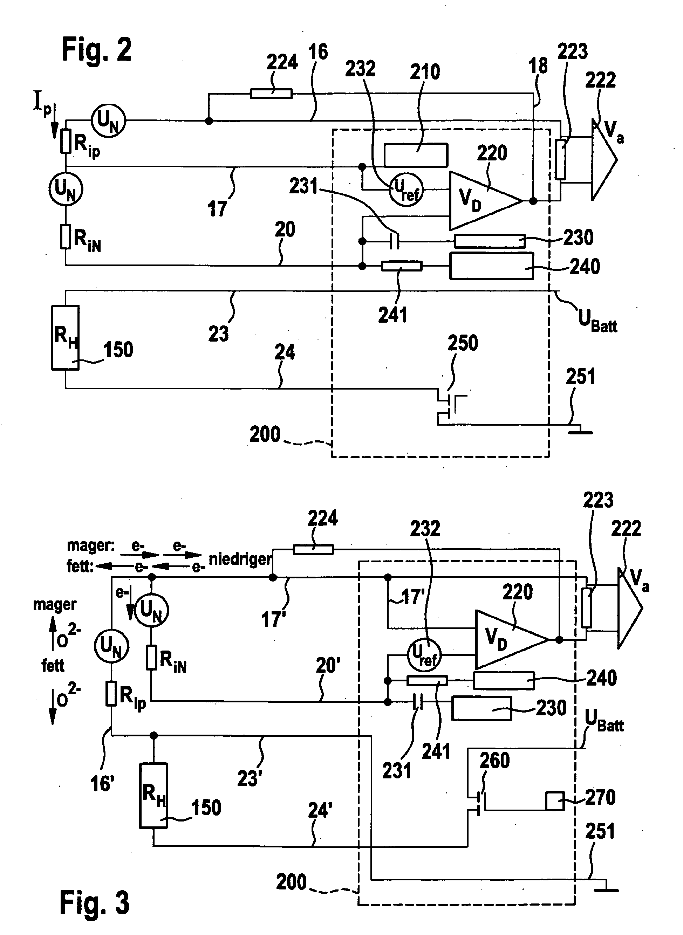

Der Gassensor 10 enthält weiterhin eine Sensorheizung 22, die Heizleitungen 23, 24 aufweist. Die Pumpstromleitung 16, die Messleitung 17, die Referenzpumpstromleitung 20 und die Heizleitungen 23, 24 werden einem Steuergerät 200 zugeführt, wie es schematisch in Fig. 2 dargestellt ist. Hierzu sind beispielsweise Steckverbinder, welche Steckerpins mit der entsprechenden Anzahl der Leitungen aufweisen, vorgesehen.

In Fig. 2 ist schematisch ein Ersatzschaltbild eines derartigen Gassensors sowie ein detaillierter Aufbau der Schaltungsanordnung 200, die beispielsweise Teil eines Steuergerätes ist, dargestellt.

Mittels der Referenzpumpstromleitung 20 wird ein Referenzpümpstrom, den eine Stromquelle 240 zur Verfügung stellt, der dritten Elektrode 19 über einen Widerstand 241 zugeführt. Die Referenzpumpstromquelle 240 ist ferner mit dem invertierenden Eingang eines Differenzverstärkers 220 verbunden, dessen Ausgang über einen Arbeitswiderstand 223 einen Pumpstrom I_{P} bereitstellt. Der Pumpstrom I_{P} ist identisch mit einem Sensorsignal, das in einem Verstärker 222 verstärkt wird. Der Pumpstrom I_{P} wird über die Pumpstromleitung 16 der äußeren Pumpelektrode 11 zugeführt. Über einen zwischen der äußeren Elektrode 11 und der inneren Elektrode 12 durch das Sensorelement ausgebildeten Widerstand Rᵢₚ fällt eine Spannung ab, die durch die Messleitung 17 abgegriffen und dem nicht invertierenden Eingang des Differenzverstärkers 220 zugeführt wird. Die Messleitung 17 ist mit einer virtuellen Masse 210 und einer Referenzspannungsquelle 232 verbunden. Die Referenzspannungsquelle 232 ist mit dem nicht invertierenden Eingang des Differenzverstärkers 220 verbunden.

Die Heizung, welche einen Heizwiderstand 150 aufweist, ist über die beiden Leitungen 23, 24 mit der Batteriespannung U_{Batt} sowie mit einem Low-side-FET 250 verbunden, der seinerseits eine Verbindung zur gemeinsamen Masse 251 der Schaltungsanordnung 200 aufweist. Ein Teil des Pumpstroms Iₚ wird über eine Abgleichleitung 18 und einen zum Messwiderstand 223 parallelen Abgleichwiderstand 224, der zum Kalibrieren des Sondensignals variabel ist, transportiert. Diese Beschaltung des Breitbandsensors erfordert hier sechs Leitungen.

Um die Anzahl der Leitungen zu reduzieren, ist bei dem in Fig. 3 dargestellten erfindungsgemäßen Gassensor vorgesehen, die äußere Pumpelektrode mit einer Heizleitung 23' elektrisch leitend zu verbinden. Diese Heizleitung 23' wiederum führt auf die gemeinsame Masse 251 der Schaltungsanordnung, beispielsweise die Steuergerätemasse eines Steuergeräts 200. Die zweite Heizleitung 24' ist über einen durch einen Takter 270 getaktet angesteuerten High-side-FET mit dem Heizwiderstand 150 der Sensorheizung verbunden. Der Pumpstrom wird bei diesem Gassensor über die Messleitung 17' eingespeist und auch dort gemessen. Zur Messung der Nernstspannung zwischen der inneren Pumpelektrode 15 und der dritten Elektrode 19 wird die Messleitung 17' dem nicht invertierenden Eingang des Differenzverstärkers 220 zugeführt. Über die Referenzpumpstromleitung 20' wird auf an sich bekannte Weise der Referenzpumpstrom, den die Stromquelle 240 zur Verfügung stellt, eingespeist. Hierzu wird der Pumpstromwandler bipolar ausgelegt, da der Pumpzelle ein negativer Pumpstrom zugeführt werden muss.

Die Nernstspannung wird über einen Instrumentenverstärker zwischen der zweiten Elektrode, das heißt der inneren Pumpelektrode 15, und der dritten Elektrode 19 abgegriffen. In diesem Falle ist die Referenzspannungsquelle 232 mit dem invertierenden Eingang des Differenzverstärkers 220 verbunden.

Sowohl bei dem aus dem Stand der Technik bekannten Gassensor, dargestellt in Fig. 2, als auch bei dem erfindungsgemäßen Gassensor, dargestellt in Fig. 3, erfolgt eine Messung des Innenwiderstands des Gassensors über eine Kapazität 231 durch eine Schaltungseinrichtung 230. Aufgrund der Messung des Innenwiderstands der Nernstzelle kann so auf die Temperatur des Gassensors geschlossen werden. Alternativ ist auch eine Temperaturbestimmung durch Messung des Heizwiderstands möglich. Der Strom für die gepumpte Referenz wird durch die Referenzpumpstromleitung 20' der dritten Elektrode 19 zugeführt und fließt über die äußere Pumpelektrode 11. Daher wird der Sauerstoff in der äußeren Pumpelektrode abgepumpt und es entfällt ein Offset des Pumpstromsignals als Folge des Abpumpens von der inneren Pumpelektrode 15. Das Referenzpumpstromsignal weist also keinen Offset auf.

Der vorstehende, in Verbindung mit Fig. 3 beschriebene Gassensor weist gegenüber einem aus dem Stand der Technik bekannten, in Verbindung mit Fig. 2 beschriebenen Gassensor den entscheidenden Vorteil auf, dass hier nur fünf statt sechs Leitungen erforderlich sind. Zwar ändert der Spannungsabfall der getakteten Heizleitung die nötige Pumpspannung, der gemessene Pumpstrom fließt aber weiterhin nur durch die Pumpzelle.

## Patentansprüche

1. Gassensor zum Bestimmen einer Sauerstoffkonzentration in einem Gasgemisch, insbesondere im Abgas von Verbrennungskraftmaschinen, mit einer Pumpzelle, die eine dem Gasgemisch ausgesetzte äußere Pumpelektrode (11) und eine dem Gasgemisch über eine Diffusionsbarriere (13) ausgesetzte innere Pumpelektrode (15) und einen zwischen der äußeren Pumpelektrode (11) und der inneren Pumpelektrode (15) angeordneten Festelektrolytkörper aufweist, sowie mit einer einem Referenzgas ausgesetzten Referenzelektrode (19) und mit einer Sensorheizung (22), wobei die äußere Pumpelektrode (11) durch eine Pumpstromleitung (16; 16'), die innere Pumpelektrode (15) durch eine Messleitung (17; 17'), die Referenzelektrode (19) durch eine Referenzpumpstromleitung (20; 20') und die Sensorheizung (22) durch zwei Heizleitungen (23, 24; 23', 24') mit einer Schaltungsanordnung (200) verbunden sind, **dadurch gekennzeichnet, dass** die Pumpstromleitung (16') und eine Heizleitung (23') miteinander elektrisch leitend verbunden auf Masse (251) gelegt sind, dass ein durch die Schaltungsanordnung (200) erzeugter Pumpstrom durch die Messleitung (17') eingespeist wird, dass die Nernstspannung zwischen der Messleitung (17') und der Referenzpumpstromleitung (20') abgegriffen wird und dass mit Hilfe einer Referenzpumpstromquelle (240) Sauerstoffionen von der äußeren Pumpelektrode (11) zur Referenzelektrode (19) gepumpt werden und dass das Messsignal der in der Messleitung (17') fließende Pumpstrom ist, der über einen Messwiderstand (223) abgreifbar ist.

2. Gassensor nach Anspruch 1, **dadurch gekennzeichnet, dass** die Sensorheizung (22) mit einer durch einen High-side-FET (200) getakteten Spannung beaufschlagbar ist.

3. Gassensor nach einem der Ansprüche 1 oder 2, **dadurch gekennzeichnet, dass** die Nernstspannung durch einen zwischen der Messleitung (17') und der Referenzpumpstromleitung (20') angeordneten Instrumentenverstärker erfassbar ist.

## Claims

1. Gas sensor for determining an oxygen concentration in a gas mixture, more particularly in the exhaust gas of internal combustion engines, comprising a pump cell, which has an outer pump electrode (11) exposed to the gas mixture and an inner pump electrode (15) exposed to the gas mixture via a diffusion barrier (13), and a solid electrolyte body arranged between the outer pump electrode (11) and the inner pump electrode (15), and also comprising a reference electrode (19) exposed to a reference gas, and comprising a sensor heating system (22), the outer pump electrode (11) being connected by a pump current line (16; 16'), the inner pump electrode (15) being connected by a measuring line (17; 17'), the reference electrode (19) being connected by a reference pump current line (20; 20') and the sensor heating system (22) being connected by two heating lines (23, 24; 23' 24') to a circuit arrangement (200), **characterized in that** the pump current line (16') and a heating line (23') electrically conductively connected to one another, are connected to earth (251), **in that** a pump current generated by the circuit arrangement (200) is fed in through the measuring line (17'), **in that** the Nernst voltage between the measuring line (17') and the reference pump current line (20') is tapped off, and **in that**, with the aid of a reference pump current source (240), oxygen ions are pumped from the outer pump electrode (11) to the reference electrode (19), and **in that** the measurement signal is the pump current flowing in the measuring line (17'), which pump current can be tapped off via a measuring resistor (223).

2. Gas sensor according to Claim 1, **characterized in that** a voltage clocked by a high-side FET (200) can be applied to the sensor heating system (22).

3. Gas sensor according to either of Claims 1 and 2, **characterized in that** the Nernst voltage can be detected by an instrument amplifier arranged between the measuring line (17') and the reference pump current line (20').

## Revendications

1. Sonde de gaz destinée à déterminer la concentration en oxygène d'un mélange de gaz, en particulier des gaz d'échappement de moteurs à combustion interne, la sonde de gaz étant dotée
d'une cellule de pompage qui présente une électrode extérieure de pompage (11) exposée au mélange de gaz et une électrode intérieure de pompage (15) exposée au mélange de gaz par l'intermédiaire d'une barrière de diffusion (13),
d'un corps en électrolyte solide disposé entre l'électrode extérieure de pompage (11) et l'électrode intérieure de pompage (15),
d'une électrode de référence (19) exposée à un gaz de référence et
d'un chauffage de sonde (22),
l'électrode extérieure de pompage (11), l'électrode intérieure de pompage (15), l'électrode de référence (19) et le chauffage de sonde (22) étant raccordés à un circuit (200) respectivement par un conducteur (16; 16') de courant de pompage, par un conducteur de mesure (17; 17'), par un conducteur (20; 20') de courant de pompage de référence et par deux conducteurs de chauffage (23, 24; 23', 24'),
**caractérisée en ce que**
le conducteur (16') de courant de pompage et un conducteur de chauffage (23') sont reliés de manière électriquement conductrice l'un à l'autre et sont raccordés à une masse (251),
**en ce que** le courant de pompage produit par le circuit (200) est apporté par le conducteur de mesure (17').
**en ce que** la tension de Nernst entre le conducteur de mesure (17') et le conducteur (20') de courant de pompage de référence est prélevée,
**en ce que** des ions oxygène sont pompés par l'électrode extérieure de pompage (11) vers l'électrode de référence (19) à l'aide d'une source (240) de courant de pompage de référence et
**en ce que** le signal de mesure est le courant de pompage qui s'écoule dans le conducteur de mesure (17') et qui peut être prélevé par l'intermédiaire d'une résistance de mesure (223).

2. Sonde de gaz selon la revendication 1, **caractérisée en ce qu'**une tension cadencée par un FET "High-side" (200) peut être appliquée sur le chauffage de sonde (22).

3. Sonde de gaz selon l'une des revendications 1 ou 2, **caractérisée en ce que** la tension de Nernst peut être saisie par un amplificateur d'instrument disposé entre le conducteur de mesure (17') et le conducteur (20') de courant de pompage de référence.
